# NEUE EUROPÄISCHE PATENTSCHRIFT

(11) **EP 1 068 112 B2**
(45) Veröffentlichungstag und Bekanntmachung des Hinweises auf die Entscheidung über den Einspruch: **31.03.2010**
(45) Hinweis auf die Patenterteilung: 16.06.2004
(21) Anmeldenummer: 99906031.2
(22) Anmeldetag: 08.01.1999
(51) Int. Cl.: B60S 1/08

(54) **REGENSENSOR**
RAIN SENSOR
DETECTEUR DE PLUIE

(30) Priorität: 08.04.1998 DE 19815749; 15.09.1998 DE 19842077; 12.10.1998 DE 19846968
(43) Veröffentlichungstag der Anmeldung: 17.01.2001
(60) Teilanmeldung: 03025962.6
(73) Patentinhaber: ROBERT BOSCH GMBH, 70442 Stuttgart (DE)
(72) Erfinder: MICHENFELDER, Gebhard, D-77839 Lichtenau (DE); RIEHL, Guenther, D-77830 Bühlertal (DE); BURKART, Manfred, D-76473 Iffezheim (DE); ROTH, Klaus, F-14125 Mondeville (FR)
(86) Internationale Anmeldenummer: PCT/DE1999/000020
(87) Internationale Veröffentlichungsnummer: WO 1999/052750

(56) Entgegenhaltungen:
- EP-A- 0 891 470
- EP-A2- 0 694 456
- DE-A- 4 300 471
- DE-A- 19 704 818
- DE-C1- 3 823 300
- FR-A- 2 722 291
- US-A- 4 701 613
- US-A- 4 874 242
- US-A- 5 543 923
- US-A- 5 703 568

## Beschreibung

Die Erfindung betrifft einen Regensensor mit den im Oberbegriff des Anspruchs 1 genannten Merkmalen.

Ein derartiger Regensensor ist aus der Patenschrift FR-A-2 722 291 bekannt.

Ein weiterer wichtiger Stand der Technik gemäß Art.54(3) EPÜ ist aus der Patentschrift EP-A-0 981470 bekannt.

Es sind weitere Scheibenwischvorrichtungen für Windschutzscheiben von Kraftfahrzeugen bekannt, bei denen eine Steuerung der Scheibenwischer nicht nur über einen herkömmlichen Lenkstockhebel, sondern zusätzlich über einen optischen Regensensor erfolgt. Der optische Regensensor umfaßt üblicherweise eine Lichtquelle, deren elektromagnetische Strahlung von der Windschutzscheibe, je nach Feuchtigkeitsbelag auf der Windschutzscheibe unterschiedlich reflektiert wird. Der reflektierte Anteil wird mittels eines Photoelementes erfaßt, so daß ein dem Feuchtigkeitsbelag entsprechendes Ausgangssignal des Regensensors bereitgestellt werden kann. Diese Ausgangssignale können derart ausgewertet und zur Steuerung der Scheibenwischer verwendet werden, daß sowohl die Einschaltung als auch die Wischergeschwindigkeit in Abhängigkeit von einer gemessenen Regenmenge variiert wird.

Bekannte Regensensoren werden üblicherweise innen an der Windschutzscheibe angebracht, vorzugsweise hinter einem Innenrückspiegel. Zur Befestigung werden beispielsweise geklebte Mefallfüße verwendet. Bekannt sind daneben auch Befestigungen über einen zusätzlichen Rahmen, der zuvor mit der Scheibe verbunden wird und in den später das Regensensorgehäuse eingedrückt wird.

### Vorteile der Erfindung

Der erfindungsgemäße Regensensor mit den im Anspruch 1 genannten Merkmalen weist insbesondere den Vorteil auf, daß im wesentlichen nur drei Einzelteile zu seinem Aufbau erforderlich sind. Der Regensensor besteht im wesentlichen aus einem Gehäuse, aus dem die elektrischen Leitungen zur Verbindung mit einer nachgeschalteten Auswerteeinheit herausgeführt sind, einer Leiterplatte beziehungsweise Platine sowie einem Lichtleitkörper, der vorzugsweise bereits über alle notwendigen optischen Linsenstrukturen verfügt. Dadurch wird ein kostengünstiger, sehr kompakter und einfach zu montierender Regensensor bereitgestellt. Insbesondere über eine transparente Folie, die vorzugsweise beidseitig selbstklebend ist, läßt sich eine einfache Montage des Regensensors erreichen, ohne daß dessen optische Eigenschaften beeinträchtigt werden. Ferner läßt sich der Regensensor mit wenigen Montageschritten herstellen, so daß dieser kostengünstig in Massenfertigung produzierbar ist.

Gemäß den kennzeichnenden Merkmalen des Anspruchs 1 enthält der Lichtleitkörper acht eingeformte linsenförmige Strukturen, die für die gewünschte Fokussierung und Bündelung des vom Sender emittierten Lichtes sowie der vom Empfänger detektierten Lichtanteile sorgen und als weiteren Empfänger wenigstens einen Umgebungslichtsensor, wobei die Fokussierung des einfallenden Umgebungslichts durch den Lichtleitkörper erfolgt.

Durch eine Montage aller erforderlichen elektronischen und optoelektronischen Bauteile auf einer gemeinsamen Platine, vorzugsweise in SMD-(Surface Mounted Device)-Technik bestückt, lassen sich sehr kompakte Sensoren realisieren, die sich zudem im Fahrzeug problemlos montieren lassen. So kann ein derartiger Regensensor deutlich kompakter ausgeführt sein als bekannte Regensensoren und wie diese beispielsweise hinter einem Innenrückspiegel an der Innenseite der Windschutzscheibe montiert sein.

In bevorzugter Ausgestaltung der Erfindung bildet der Lichtleitkörper gleichzeitig den Deckel des Sensorgehäuses und bildet auf diese Weise mit diesem ein komplettes Elektronikgehäuse. Die Verbindung kann in vorteilhafter Weise durch Verklipsen sichergestellt werden. Eine abziehbare Schutzfolie auf äußerer Klebeseite der transparenten Klebefolie bildet gleichzeitig einen Schutz des Lichtleitkörpers gegen mechanische Beschädigung bereits beim Transport. Durch den sehr kompakten Aufbau sind Autohersteller als Abnehmer derartiger Regensensoren in die Lage versetzt, eine einfache und schnelle und damit sehr kostengünstige Montage vornehmen zu können, die sich zudem problemlos automatisieren läßt.

Ein Ausgangssignal des erfindungsgemäßen Regensensors läßt sich in vorteilhafter Weise zur Ansteuerung einer Scheibenwischvorrichtung und/oder einer Fahrzeugbeleuchtung einsetzen. So kann es beispielsweise bei stärkerem Regen oder bei Nebel sinnvoll sein, zusätzliche Nebelscheinwerfer automatisch einzuschalten.

Die Fokussierung des einfallenden Lichts erfolgt durch den Lichtleitkörper, der gleichzeitig als Grundplatte für das Sensorgehäuse fungiert. Ein solcher Lichtleitkörper kann beispielsweise aus einem Kunststoff wie PMMA (Polymethylmetachrylat) im Spritzgußverfahren hergestellt seih, wobei sich in einfacher Weise optische Strukturen wie Sammellinsen im Formprozeß einbringen lassen. Bei Verwendung von infrarotem Licht für die Regensensorfunktion ist es vorteilhaft, den Lichtleitkörper aus schwarzem PMMA herzustellen und lediglich den Lichtdurchtritt für den Umgebungslichtsensor aus klarem Kunststoff vorzusehen. Dies läßt sich beispielsweise durch Verarbeitung im sogenannten Zweifarbspritzverfahren oder auch durch Kombination, beispielsweise durch Verklebung oder Verschweißung, zweier einfarbiger Kunststoffteile realisieren.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1a: eine schematische Seitenansicht eines erfindungsgemäßen Regensensors,
- Figur 1b: eine schematische Draufsicht auf den Regensensor entsprechend Figur 1,
- Figur 2: eine schematische Schnittansicht des erfindungsgemäßen Regensensors in einer Ex - plosionsdarstellung und
- Figur 3: einen Lichtleitkörper in einer perspektivischen Darstellung.

### Beschreibung der Ausführungsbeispiele

Figur la zeigt in einer schematischen Seitenansicht einen erfindungsgemäßen Regensensor 4, der innen an einer Windschutzscheibe 2 eines Kraftfahrzeuges befestigbar ist. Die Montage des Regensensors 4 hinter der Windschutzscheibe 2 kann beispielsweise durch Klebung in Höhe eines hier nicht dargestellten Innenrückspiegels erfolgen. Bei einer Positionierung hinter dem Rückspiegel entsteht keine zusätzliche Sichtbehinderung für einen Fahrer. Die elektronischen und optoelektronischen Bauteile des Regensensors 4 sind umschlossen von einem Gehäuse 6, das nach innen hin, das heißt zum Fahrgastraum, lichtundurchlässig ist. Die Gehäuseunterseite, die eine flächige Verbindung zur Windschutzscheibe 2 bildet, stellt ein Lichtleit körper 10 dar, in den alle zur Funktion erforderlichen optischen Strukturen (Linsenstrukturen, Lichtleitstrukturen und dergleichen) eingebracht sind. Dies kann beispielsweise durch ein Spritzgußverfahren eines geeigneten optisch durchlässigen Kunststoffes erfolgen. Zur mechanischen und optischen Koppelung des Regensensors 4 mit der Windschutzscheibe ist der Lichtleitkörper 10 über eine beidseitig selbstklebende transparente Klebefolie 36 mit der Windschutzscheibe 2 verbunden.

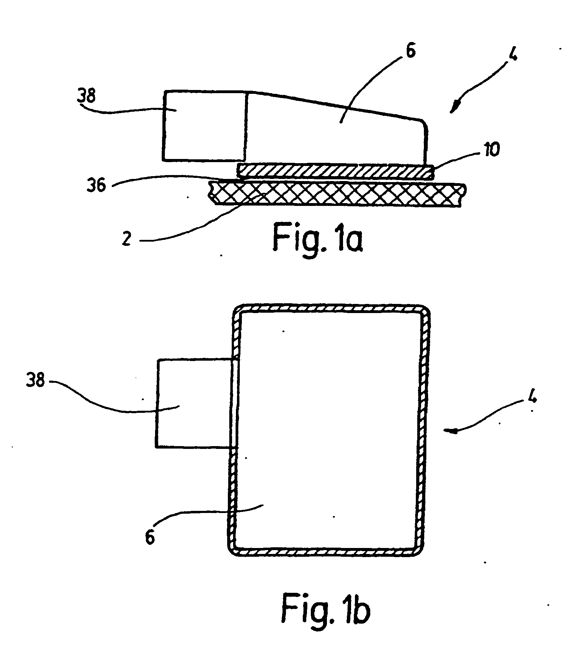

Figur 1b zeigt eine schematische Draufsicht auf den Regensensor 4 entsprechend Figur 1a. Erkennbar ist hierbei ein Stecker 38 zur elektrischen Verbindung zu einer nachgeschalteten, hier jedoch nicht dargestellten, Auswerteeinheit. Diese kann anhand der vom Regensensor 4 gelieferten Signale eine Scheibenwischvorrichtung und/oder eine Fahrzeugbeleuchtung variabel ansteuern. Der Stecker 38 kann, je nach Ausführungsform vier oder beispielsweise acht Steckerstifte aufweisen, die in eine montierte Platine im Gehäuse 6 hineinragen und dort zur Herstellung einer elektrischen Verbindung verlötet oder verpreßt sind.

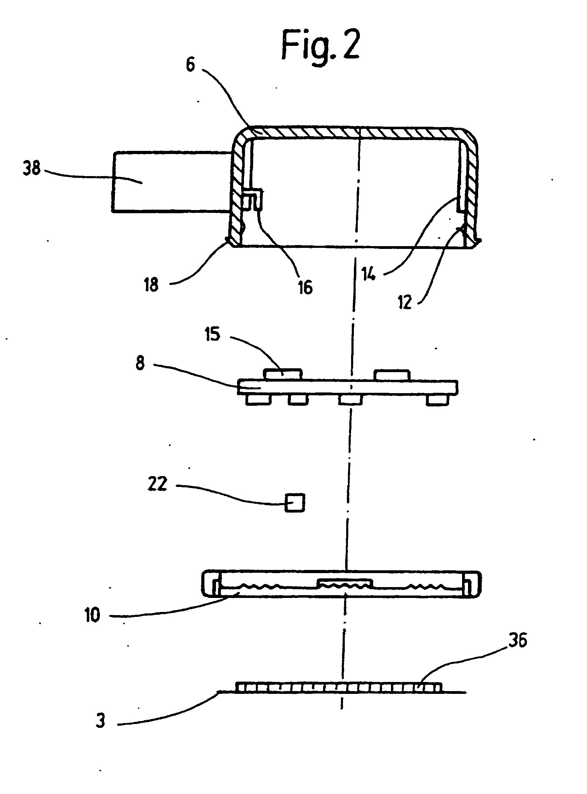

Die Figur 2 zeigt eine schematische Schnittansicht auf den erfindungsgemäßen Regensensor 4 in einer Explosionsdarstellung. Im topfförmigen Gehäuse 6, das in dieser Darstellung nach unten offen ist, ist eine Platine 8 gegen einen Absatz 14 innen im Gehäuse 6 einlegbar, auf der elektronische und optoelektronische Bauelemente, beispielsweise in SMD(surface mounted device)-Technik, montiert sind. Um die Platine 8 im Gehäuse 6 eindeutig zu fixieren, liegt sie gegen den Absatz 14 im Gehäuse an, nachdem sie beim Einlegen über die umlaufende Nut 12 gedrückt wurde. Diese hält die Platine 8 fest und hindert sie so am herausfallen nach unten. Weiterhin sind die nach innen in das Gehäuse 6 ragenden Steckerstifte 16 erkennbar, die beispielsweise mit einer partiellen Lötung oder dergleichen mit den passenden Leiterbahnen der Platine 8 verbunden werden. Ebenso möglich ist auch eine leitende Preßverbindung.

Als Bauteil ist beispielsweise eine auf der Oberseite der Patine 8 montierte Leuchtdiode beziehungsweise LED 15 erforderlich, die sichtbares oder infrarotes Licht in Form eines gerichteten Lichtstrahles emittiert. Der Lichtstrahl trifft in einem spitzen Winkel auf die Windschutzscheibe 2 auf und wird aufgrund deren Brechungsindex an ihrer äußeren Grenzfläche zur Luft normalerweise vollständig reflektiert und trifft nahezu vollständig als reflektierter Anteil auf eine Photodiode, die ebenfalls an geeigneter Stelle auf der Oberseite der Platine 8 montiert ist. Befindet sich nun am Ort der Reflexion des Lichtstrahls ein Wassertropfen außen auf der Windschutzscheibe 2, resultiert an der äußeren Grenzfläche der Scheibe zur Luft ein verändertes Brechungsverhalten, wodurch der Lichtstrahl an der Grenzfläche nicht vollständig reflektiert wird, sondern ein nach außen austretender gestreuter Anteil entsteht. Das dadurch abgeschwächte Signal des reflektierten Anteiles kann von der Photodiode detektiert und quantitativ ausgewertet werden und somit als Feuchtigkeitsschleier beziehungsweise Regen außen auf der Windschutzscheibe 2 des Kraftfahrzeuges erfaßt werden.

Die gewünschte Fokussierung des Lichtstrahles beziehungsweise des reflektierten Anteiles kann zweckmäßigerweise durch einen geeignet geformten Lichtleitkörper 10, bestehend aus einem hochtransparenten und gut spritzgießfähigen Kunststoff wie beispielsweise PMMA (Polymethylmetachrylat), erreicht werden, der gleichzeitig die Grundseite des Gehäuses 6 bildet und flächig über eine transparente Klebefolie 36 mit der Windschutzscheibe 2 verbunden ist. Durch geeignete Formung, vorzugsweise im Spritzgußverfahren, enthält der Lichtleitkörper 10 eingeformte linsenförmige Strukturen, die für die gewünschte Fokussierung und Bündelung des von der LED 15 emittierten Lichtes sowie der von der Photodiode detektierten Lichtanteile sorgen.

Auf der Platine 8 ist weiterhin ein Umgebungslichtsensor 22 angeordnet, der von außen durch die Windschutzscheibe 2 des Kraftfahrzeuges fallendes Umgebungslicht in seiner Helligkeit erfassen und ein davon abhängiges Steuersignal für eine automatische Lichtsteuerung beziehungsweise für eine Tag/Nacht-Umschaltung der Scheibenwischersteuerung im Kraftfahrzeug generieren kann. Zweckmäßigerweise reagiert der Umgebungslichtsensor 22 vorzugsweise auf bestimmte UV-Lichtanteile, die nur im natürlichen Sonnenlicht vorkommen, um auf diese Weise ein unbeabsichtigtes Abschalten der Fahrzeugscheinwerfer in hell beleuchteten Tunnels oder Unterführungen mit starken künstlichen Lichtquellen auszuschließen.

Bei Verwendung von infrarotem Licht für den Regensensor 4 kann der Lichtleitkörper 10 beispielsweise aus schwarzem PMMA bestehen und nur eine kleine Stelle für den Umgebungslichtsensor 22 aus klarem Material enthalten.

Erkennbar ist weiterhin die transparente Klebefolie 36, die eine flächige Verbindung zur Windschutzscheibe 2 herstellt, wobei in der Figur 2 eine zusätzliche abziehbare Schutzfolie 3 auf der transparenten Klebefolie 36 erkennbar ist. Nach Entfernen dieser Schutzfolie 3 kann der Regensensor 4 einfach an die gewünschte Stelle auf die Windschutzscheibe 2 geklebt werden. Die Schutzfolie 3 dient einem Schutz des Lichtleitkörpers 10 und der Klebefolie 36 während des Transportes, Montage oder dergleichen vor mechanischen Beschädigungen.

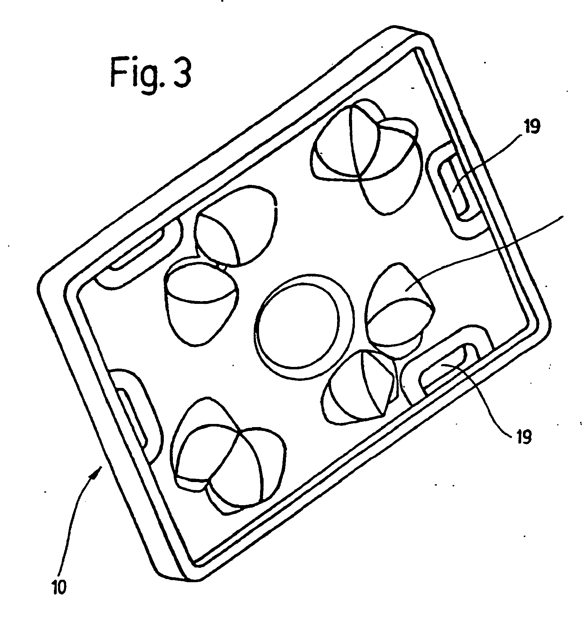

Figur 3 zeigt zur Verdeutlichung nochmals den Lichtleitkörper 10 mit den darin im Spritzgießprozeß eingebrachten fokussierenden Strukturen (Sammellinsen) in einer perspektivischen Darstellung. Erkennbar sind am äußeren Rand jeweils eine längliche Nut 19, in die jeweils ein passender Steg 18 des Gehäuses 6 geklipst werden kann (Figur 2) und so eine festgefügte Verbindung zwischen dem unten offenen Gehäuse 6 und dem den unteren Gehäusedeckel bildenden Lichtleitkörper 10 ermöglicht.

## Patentansprüche

1. Regensensor, insbesondere für Kraftfahrzeuge, mit einer wenigstens einen Sender und wenigstens einen Empfänger für elektromagnetische Wellen, Lichtwellen, aufweisenden Meßstrecke, in der eine Windschutzscheibe angeordnet ist und die diewellenausbreitung zwischen dem wenigstens einen Sender und dem wenigstens einen Empfänger derart beeinflußt, dass sich bei Ausbildung eines Belages auf der Windschutzscheibe, insbesondere bei einer Benetzung durch Niederschlag, ein vom Empfänger sensiertes Ausgangssignal ändert, wobei die optischen und elektronischen Komponenten des Regensensors (4) in einem Gehäuse (6) montiert sind, und ein Lichtleitkörper (10) einen Deckel des Gehäuses (6) bildet, **dadurch gekennzeichnet, daß** der Lichtleitkörper (10) acht eingeformte linsenförmige Strukturen enthält, die für die gewünschte Fokussierung und Bündelung des vom Sender emittierten Lichtes sowie der vom Empfänger detektierten Lichtanteile sorgen und daß als weiterer Empfänger wenigstens ein Umgebungslichtsensor (22) vorgesehen ist, wobei die Fokussiesung des einfallenden Umgebungslichts durch den Lichtleitkörper (10) erfolgt.

2. Regensensor nach Anspruch 1, **dadurch gekennzeichnet, dass** der Lichtleitkörper (10) eine mit der Windschutzscheibe (2) flächig verbundene Grundplatte des Gehäuses (6) bildet.

3. Regensensor nach Anspruch 2, **dadurch gekennzeichnet, dass** alle optischen und elektronischen Komponenten des Regensensors (4) in SMD-Technik auf einer gemeinsamen Platine (8) montiert sind.

4. Regensensor nach Anspruch 3, **dadurch gekennzeichnet, dass** der Regensensor (4) in einem quaderförmigen Gehäuse (6) mit einem integriertem Stecker (38) zur elektrischen Verbindung mit einer nachgeschalteten Auswerteeinheit montiert ist.

5. Regensensor nach Anspruch 4, **dadurch gekennzeichnet, dass** die Platine (8) über Kontaktstifte mit dem Stecker (38) am Gehäuse (6) verbunden ist.

6. Regensensor nach Anspruch 1, **dadurch gekennzeichnet, dass** der Regensensor (4) von innen mit der Windschutzscheibe (2) verklebt ist.

7. Regensensor nach Anspruch 6, **dadurch gekennzeichnet, dass** eine transparente beidseitig selbstklebende Folie (36) als Verbindung zwischen Windschutzscheibe (2) und Lichtleitkörper (10) des Regensensors (4) vorgesehen ist.

8. Regensensor nach einem der vorhergehenden Ansprüche, **dadurch gekennzeichnet, dass** ein Ausgangssignal des Regensensors (4) an eine nachgeordnete Auswerteschaltung Informationen über einen momentanen Benetzungsgrad der Windschutzscheibe (2) enthält.

9. Regensensor nach Anspruch 8, **dadurch gekennzeichnet, dass** eine Scheibenwischvorrichtung und/oder eine Fahrzeugbeleuchtung in Abhängigkeit von den Ausgangssignalen des Regensensors (4) ansteuerbar sind.

10. Regensensor nach einem der vorhergehenden Ansprüche, **dadurch gekennzeichnet, dass** der wenigstens eine Sender eine LED (15) ist.

11. Regensensor nach Anspruch 10, **dadurch gekennzeichnet, dass** der erste Empfänger, der das von der wenigstens einen LED (15) emittierte optische Signal detektiert, eine Photodiode ist.

12. Regensensor nach einem der vorhergehenden Ansprüche, **dadurch gekennzeichnet, dass** der Umgebungslichtsensor (22) einen Öffnungswinkel von circa 40° mit einer Öffnungsrichtung in Fahrtrichtung nach schräg oben aufweist.

13. Regensensor nach einem der vorhergehenden Ansprüche, **dadurch gekennzeichnet, dass** der wenigstens eine Umgebungslichtsensor (22) auf ultraviolettes Licht, insbesondere auf Sonnenlicht, empfindlich sind.

14. Regensensor nach einem der vorhergehenden Ansprüche, **dadurch gekennzeichnet, dass** bei Einsatz von IR (Infrarot)-Licht der Lichtleitkörper (10) für die Regensensorfunktion aus schwarzem Kunststoff besteht.

15. Regensensor nach einem der vorhergehenden Ansprüche, **dadurch gekennzeichnet, dass** für den wenigstens einen Empfänger (20) optische Bereiche im Lichtleitkörper (10) aus transparentem, klarem, Kunststoff vorgesehen sind.

16. Regensensor nach einem der vorhergehenden Ansprüche, **dadurch gekennzeichnet, dass** der Lichtleitkörper (10) aus einem Kunststoffteil im Zweifarb-Spritzverfahren besteht.

17. Regensensor nach einem der vorhergehenden Ansprüche, **dadurch gekennzeichnet, dass** der Lichtleitkörper (10) durch Kombination zweier einfarbiger Kunststoffe herstellbar ist.

## Claims

1. Rain sensor, in particular for motor vehicles, with a measuring section having at least one transmitter and at least one receiver for electromagnetic waves, light waves, in which a windscreen is arranged and which influences the wave propagation between the at least one transmitter and the at least one receiver in such a way that, when a coating forms on the windscreen, in particular when there is wetting due to precipitation, an output signal sensed by the receiver changes, in which arrangement the optical and electronic components of the rain sensor (4) are mounted in a housing (6), and a light guide (10) forms a cover of the housing (6), **characterized in that** the light guide (10) includes eight incorporated lens structures, which provide the desired focussing and concentration of the light emitted by the transmitter and also the light components detected by the receiver, and **in that** at least one ambient light sensor (22) is provided as a further receiver, in which the focussing of the incident ambient light takes place through the light guide (10).

2. Rain sensor according to Claim 1, **characterized in that** the light guide (10) forms a base plate of the housing (6) which is connected over its surface area to the windscreen (2).

3. Rain sensor according to Claim 2, **characterized in , that** all the optical and electronic components of the rain sensor (4) are mounted by SMD technology on a common printed circuit board (8).

4. Rain sensor according to Claim 3, **characterized in that** the rain sensor (4) is mounted in a cuboidal housing (6), with an integrated connector (38) for the electrical connection to a downstream evaluation unit.

5. Rain sensor according to Claim 4, **characterized in that** the printed circuit board (8) is connected to the connector (38) on the housing (6) via contact pins.

6. Rain sensor according to Claim 1, **characterized in that** the rain sensor (4) is adhesively bonded to the windscreen (2) from the inside.

7. Rain sensor according to Claim 6, **characterized in that** a transparent film (36) which is self-adhesive on both sides is provided as the connection between the windscreen (2) and the light guide (10) of the rain sensor (4).

8. Rain sensor according to one of the preceding claims, **characterized in that** an output signal of the rain sensor (4) to a downstream evaluation circuit contains information on a momentary degree of wetting of the windscreen (2).

9. Rain sensor according to Claim 8, **characterized in that** a windscreen wiping device and/or a vehicle lighting system can be activated in dependence on the output signals of the rain sensor (4).

10. Rain sensor according to one of the preceding claims, **characterized in that** the at least one transmitter is an LED (15).

11. Rain sensor according to Claim 10, **characterized in that** the first receiver, which detects the optical signal emitted by the at least one LED (15), is a photodiode.

12. Rain sensor according to one of the preceding claims, **characterized in that** the ambient light sensor (22) has an acceptance angle of approximately 40° with an acceptance direction obliquely upwards in the driving direction.

13. Rain sensor according to one of the preceding claims, **characterized in that** the at least one ambient light sensor (22) is sensitive to ultraviolet light, in particular to sunlight.

14. Rain sensor according to one of the preceding claims, **characterized in that,** when IR (infrared) light is used, the light guide (10) for the rain sensor function consists of black plastic.

15. Rain sensor according to one of the preceding claims, **characterized in that** optical regions of transparent, clear plastic are provided in the light guide (10) for the at least one receiver (20).

16. Rain sensor according to one of the preceding claims, **characterized in that** the light guide (10) comprises a plastic part formed by a two-colour injection-moulding process.

17. Rain sensor according to one of the preceding claims, **characterized in that** the light guide (10) can be produced by a combination of two single-coloured plastics.

## Revendications

1. Capteur de pluie notamment pour des véhicules automobiles comportant un chemin de mesure avec au moins un émetteur et au moins un récepteur d'ondes électromagnétiques, ondes lumineuses, chemin de mesure dont fait partie un pare-brise et qui influence l'étalement des ondes entre au moins un émetteur et au moins un récepteur de façon que le signal de sortie détecté par le capteur change lorsque se développe un dépôt sur le pare-brise notamment lorsqu'il est humidifié par un dépôt d'eau, les composants optiques et électroniques du capteur de pluie (4) étant montés dans un boîtier (6) dont le guide de lumière (10) forme le couvercle,
**caractérisé en ce que**
le guide de lumière (10) est muni de huit structures de lentilles intégrées pour focaliser et regrouper la lumière émise par l'émetteur et les parties de lumière détectées par le récepteur, et
comme second récepteur, il est prévu au moins un capteur de lumière ambiante (22), la focalisation de la lumière ambiante incidente se faisant par le guide de lumière (10).

2. Capteur de pluie selon la revendication 1;
**caractérisé en ce que**
le guide de lumière (10) forme une plaque de base du boîtier (6), reliée à plat au pare-brise (2).

3. Capteur de pluie selon la revendication 2,
**caractérisé en ce que**
tous les composants optiques et électroniques du capteur de pluie (4) sont montés sur une platine commune (8) en technique de montage en surface SMD.

4. Capteur de pluie selon la revendication 3,
**caractérisé en ce que**
le capteur de pluie (4) est monté dans un boîtier parallélépipédique (6) intégrant un connecteur (38) pour la liaison électrique avec une unité d'exploitation en aval.

5. Capteur de pluie selon la revendication 4,
**caractérisé en ce que**
la platine (8) est reliée au connecteur (38) du boîtier (6) par des broches de contact.

6. Capteur de pluie selon la revendication 1,
**caractérisé en ce que**
le capteur de pluie (4) est collé contre la face intérieure du pare-brise (2).

7. Capteur de pluie selon la revendication 6,
**caractérisé par**
un film autocollant sur ses deux faces, transparent (36), assure la liaison entre le pare-brise (2) et l'organe de guidage de lumière (10) du capteur de pluie (4).

8. Capteur de pluie selon l'une quelconque des revendications précédentes,
**caractérisé en ce qu'**
un signal de sortie du capteur de pluie (4) à un circuit d'exploitation en aval contient des informations concernant le degré de mouillage instantané du pare-brise (2).

9. Capteur de pluie selon la revendication 8,
**caractérisé en ce qu'**
un dispositif d'essuie-glace et/ou un éclairage de véhicule se commandent en fonction des signaux de sortie du capteur de pluie (4).

10. Capteur de pluie selon l'une quelconque des revendications précédentes,
**caractérisé en ce qu'**
au moins un émetteur est une diode LED (15).

11. Capteur de pluie selon la revendication 10,
**caractérisé en ce que**
le premier récepteur qui détecte les signaux optiques émis par au moins une diode LED (15) est une photodiode.

12. Capteur de pluie selon l'une quelconque des revendications précédentes,
**caractérisé en ce que**
le capteur de lumière ambiante (22) a un angle d'ouverture d'environ 40° avec une direction d'ouverture inclinée vers de haut dans la direction de déplacement.

13. Capteur de pluie selon l'une quelconque des revendications précédentes,
**caractérisé en ce qu'**
au moins un capteur de lumière ambiante (22) est sensible à la lumière ultraviolette notamment celle de la lumière solaire.

14. Capteur de pluie selon l'une quelconque des revendications précédentes,
**caractérisé en ce qu'**
en cas d'utilisation de lumière infrarouge IR, le guide de lumière (10) est réalisé en matière plastique noire pour la fonction du capteur de pluie.

15. Capteur de pluie selon l'une quelconque des revendications précédentes,
**caractérisé en ce que**
pour au moins un récepteur (20), les zones optiques du guide de lumière (10) sont en matière plastique claire transparente.

16. Capteur de pluie selon l'une quelconque des revendications précédentes,
**caractérisé en ce que**
le guide de lumière (10) est formé d'une pièce en matière plastique selon un procédé d'injection bicolore.

17. Capteur de pluie selon l'une quelconque des revendications précédentes,
**caractérisé en ce que**
le guidage de lumière (10) est réalisé par la combinaison de deux matières plastiques monochromes.
